(19) Europäisches Patentamt
European Patent Office
Office européen des brevets

(11) **EP 4 421 737 A2**

(12) **EUROPEAN PATENT APPLICATION**

(43) Date of publication:
**28.08.2024 Bulletin 2024/35**

(21) Application number: **24159494.4**

(22) Date of filing: **23.02.2024**

(51) International Patent Classification (IPC):
**G06T 7/50** [(2017.01)]

(52) Cooperative Patent Classification (CPC):
**G06T 7/50;** G06T 2207/10068; G06T 2207/20081;
G06T 2207/30092

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023 JP 2023028663**

(71) Applicant: **FUJIFILM Corporation
Tokyo 106-8620 (JP)**

(72) Inventor: **HIGA, Katsuyuki
Kanagawa, 258-8577 (JP)**

(74) Representative: **Hughes, Andrea Michelle
Dehns Germany
Theresienstraße 6-8
80333 München (DE)**

(54) **IMAGE LEARNING DEVICE AND IMAGE LEARNING METHOD**

(57)     Provided are an image learning device (11) and an image learning method capable of learning distance estimation by using sparse actual distance data as ground truth data in distance estimation for an observation image (40).

An image learning device that acquires at least one observation image (40) obtained by imaging an observation target with an image sensor, calculates, for the observation image (40), an estimated distance to the observation target for each of a plurality of locations within an imaging range of the image sensor by using a distance estimation parameter, and updates the distance estimation parameter based on a difference between an actual distance obtained by measuring a distance to the observation target and the estimated distance for at least one location within the imaging range, and the like are used.

FIG. 8

## Description

## BACKGROUND OF THE INVENTION

1. Field of the Invention

The present invention relates to an image learning device and an image learning method.

2. Description of the Related Art

In order to acquire a three-dimensional structure of an environment, a machine learning method may be used to perform distance estimation based on an image. In a case of learning distance estimation, it is common to use an actual distance value to each pixel within an image, which is measured using devices such as a laser measurement device, as ground truth data.

For an observation image, only extremely sparse pieces of actual distance data may be obtained such as actual distance values present in less than 1% of regions within the image. There is an example in which supervised learning is performed using relatively sparse actual distance data (with values present in 30% to 50% of regions, or the like) as a ground truth. However, in a case where extremely sparse actual distance data is used as the ground truth, there is a probability that the same method may not lead to effective learning.

JP2017-217215A describes that calibration for calibrating relative position information between a camera and a pattern projector that projects a measurement pattern is performed. Specifically, image processing is performed based on an image of the measurement pattern projected onto a measurement target in a pattern light projection method to obtain a three-dimensional shape of the measurement target. JP2020-534617A describes that a machine learning algorithm is applied to two-dimensional image data and point cloud data of an object, which is detected from an image captured by an image capturing device, to estimate parameters for a three-dimensional bounding box and define coordinates.

## SUMMARY OF THE INVENTION

In JP2017-217215A, although the three-dimensional shape of the measurement target is estimated, it does not describe that distance estimation from the sparse actual distance data is performed and the learning related to these is performed, because the measurement pattern is projected during imaging and the three-dimensional shape is obtained in a state in which distances of points distributed in a grid form within the image are acquired. In JP2020-534617A, although a three-dimensional bounding box, which is robust for sparse point cloud data, is estimated using the machine learning algorithm, it does not describe a specific example or the like of sparse point cloud data through which three-dimensional coordinates can be estimated in a state in which coordinate information or distance information is extremely small. In both JP2017-217215A and JP2020-534617A, there is no description or suggestion regarding the definition or criteria for sparse points. Given the above points, it is desirable for training of a distance estimator, which performs distance estimation of an observation target within an image, to progress even with sparse actual distance data such as in a case where only one point within the image has an acquirable actual distance value.

An object of the present invention is to provide an image learning device and an image learning method capable of learning distance estimation by using sparse actual distance data as ground truth data in distance estimation for an observation image.

According to an aspect of the present invention, there is provided an image learning device comprising: a processor, in which the processor is configured to: acquire at least one observation image obtained by imaging an observation target with an image sensor; calculate, for the observation image, an estimated distance to the observation target for each of a plurality of locations within an imaging range of the image sensor by using a distance estimation parameter; and update the distance estimation parameter based on a difference between an actual distance obtained by measuring a distance to the observation target and the estimated distance for at least one location within the imaging range.

It is preferable to calculate the estimated distance only for some locations in the observation image.

It is preferable to calculate the estimated distance for a location at which the actual distance is measured.

It is preferable to further include a distance estimation model, and use the distance estimation model to calculate the estimated distance using the distance estimation parameter and to perform learning to update the distance estimation parameter based on the difference.

It is preferable to acquire a first observation image and a second observation image captured after a certain time has elapsed from the first observation image from a plurality of the observation images captured in time series; calculate a camera pose change amount that is a change amount of rotation and movement of the image sensor between the first observation image and the second observation image; use the first observation image, the camera pose change amount, and the estimated distance to re-project an estimated second image in which an aspect after the certain time has elapsed from the first observation image is estimated; calculate a re-projection error between the second observation image and the estimated second image; and update the distance estimation parameter such that the re-projection error is minimized.

It is preferable to use the second observation image, the camera pose change amount, and the estimated distance to re-project an estimated first image in which an aspect before the certain time has elapsed in the second observation image is estimated; and update the distance estimation parameter such that a re-projection error between the first observation image and the estimated first image is minimized.

It is preferable to update the distance estimation parameter such that the difference between the actual distance and the estimated distance is a minimum value or is equal to or less than a predetermined threshold value.

It is preferable to calculate a scale coefficient by which an error between the actual distance and a value obtained by multiplying the estimated distance by the scale coefficient is a minimum value or is equal to or less than a threshold value; and update the distance estimation parameter by using the scale coefficient.

It is preferable that the observation target is a digestive tract, and the observation image is an endoscopic image.

It is preferable to use a value acquired through laser-based distance measurement as the actual distance.

According to another aspect of the present invention, there is provided an image learning method comprising: a step of acquiring at least one observation image obtained by imaging an observation target with an image sensor; a step of calculating, for the observation image, an estimated distance to the observation target for each of a plurality of locations within an imaging range of the image sensor by using a distance estimation parameter; and a step of updating the distance estimation parameter based on a difference between an actual distance obtained by measuring a distance to the observation target and the estimated distance for at least one location within the imaging range.

According to the present invention, it is possible to learn distance estimation by using sparse actual distance data as ground truth data in distance estimation for an observation image.

## BRIEF DESCRIPTION OF THE DRAWINGS

Fig. 1 is an explanatory diagram showing a connection device of an image learning device.
Fig. 2 is an explanatory diagram of an endoscope system connected to the image learning device.
(A) of Fig. 3 is an explanatory diagram in which imaging of an observation target is performed using an indoor imaging camera, and (B) of Fig. 3 is an explanatory diagram of an observation image which is an indoor captured image.
(A) of Fig. 4 is an explanatory diagram in which imaging of an observation target is performed using an endoscopic camera, and (B) of Fig. 4 is an explanatory diagram of an observation image which is an endoscopic image.

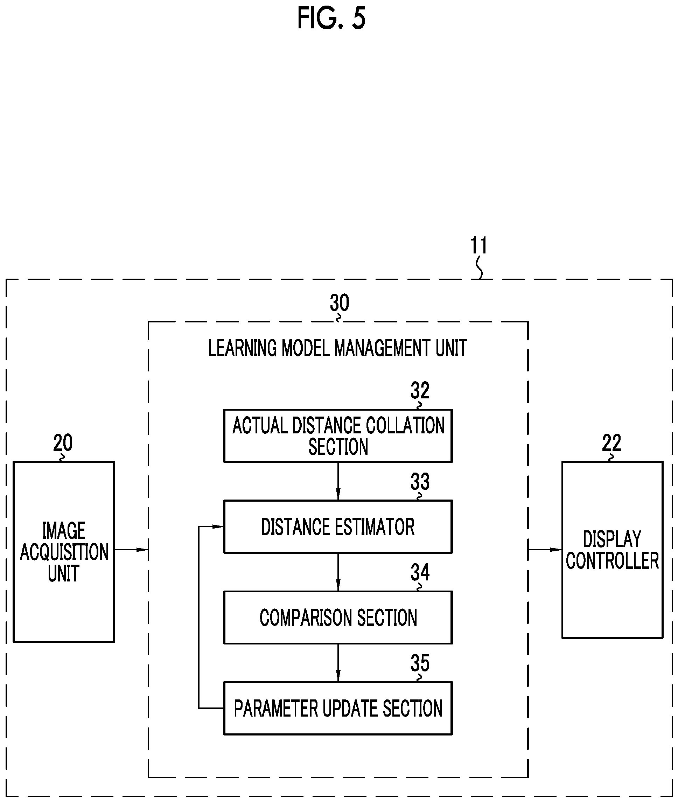

Fig. 5 is a block diagram showing a function of the image learning device.

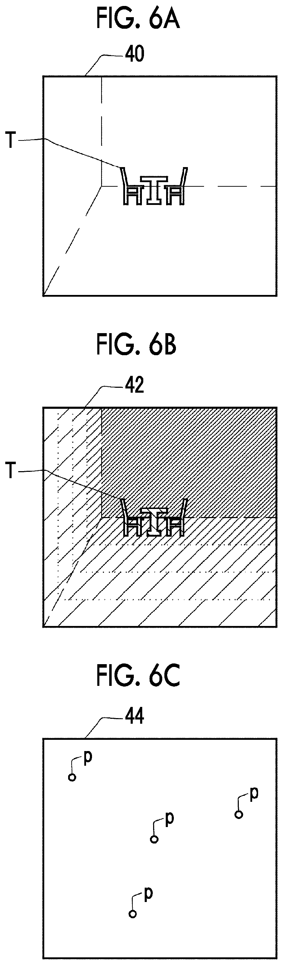

Fig. 6A is an explanatory diagram of an observation image obtained by imaging an observation target using a camera, Fig. 6B is an explanatory diagram of a dense actual distance data map in the observation image, and Fig. 6C is an explanatory diagram of a sparse actual distance data map in the observation image.

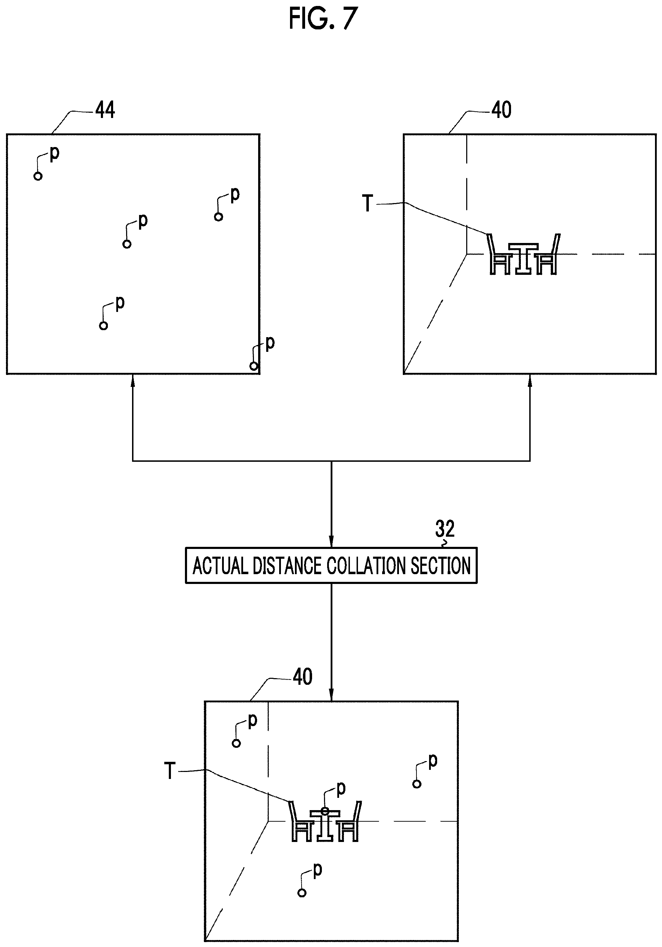

Fig. 7 is an explanatory diagram in which sparse actual distance data is collated with a corresponding observation image.

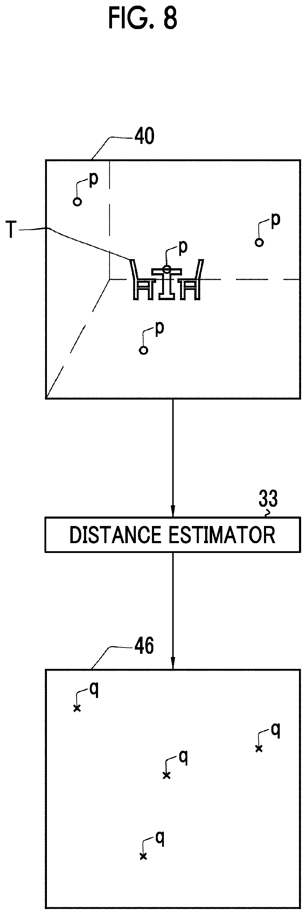

Fig. 8 is an explanatory diagram in which distance estimation of the observation image is performed using a distance estimator.

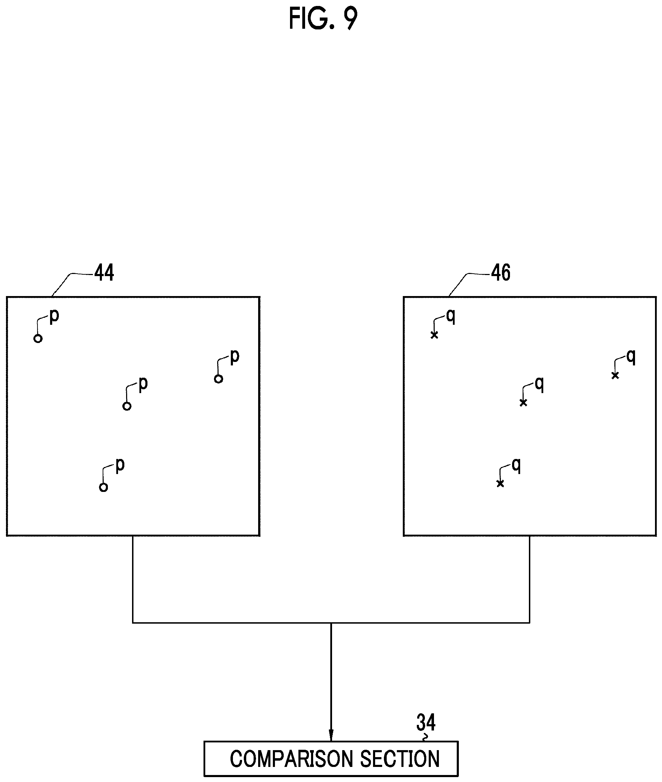

Fig. 9 is an explanatory diagram in which the sparse actual distance data and estimated distance data are input to a comparison section to calculate a loss indicating an error.

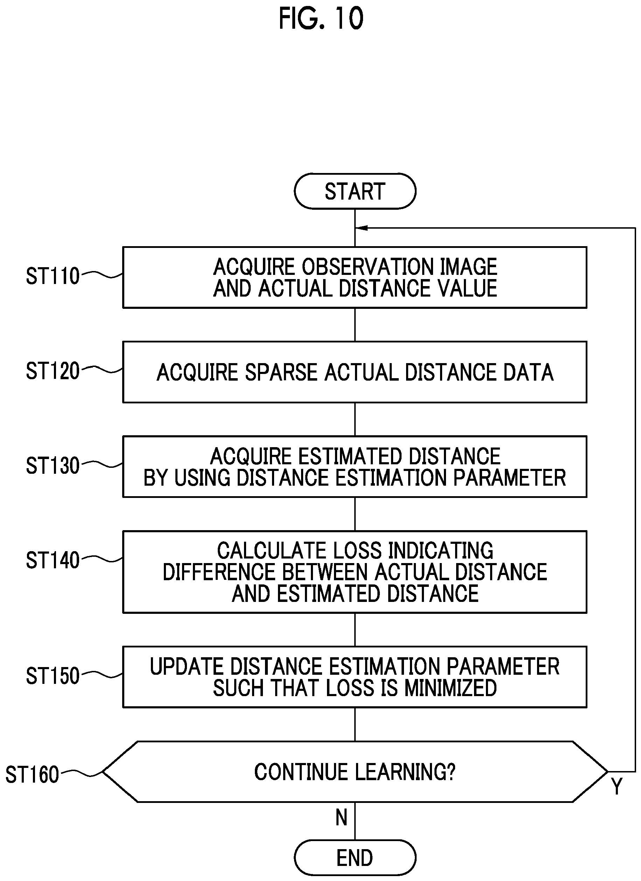

Fig. 10 is a flowchart of a series of processing of performing training of a distance estimator 33 through update of a distance estimation parameter using the sparse actual distance data.

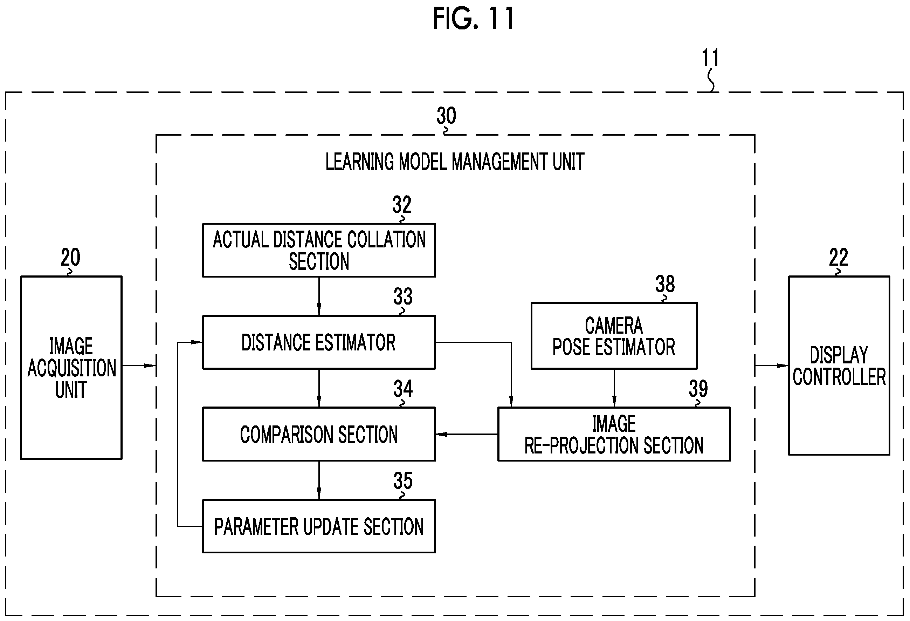

Fig. 11 is a block diagram showing a function of an image learning device in a second embodiment.

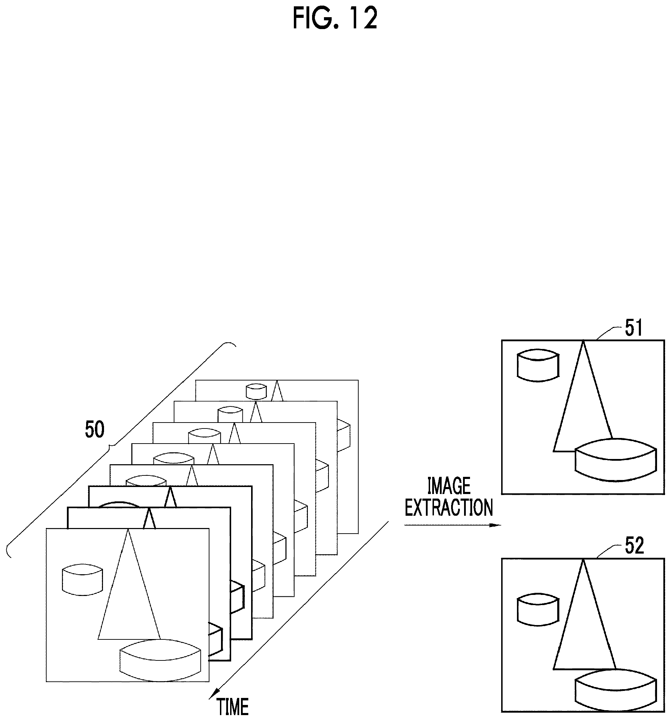

Fig. 12 is an explanatory diagram in which extraction of a first observation image and a second observation image to be used in re-projection processing is performed from time-series images.

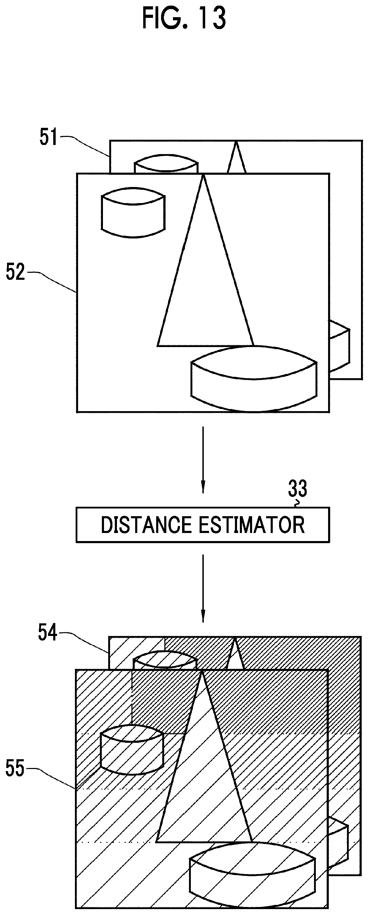

Fig. 13 is an explanatory diagram in which distance estimation of the observation images is performed by the distance estimator that has been trained through unsupervised learning.

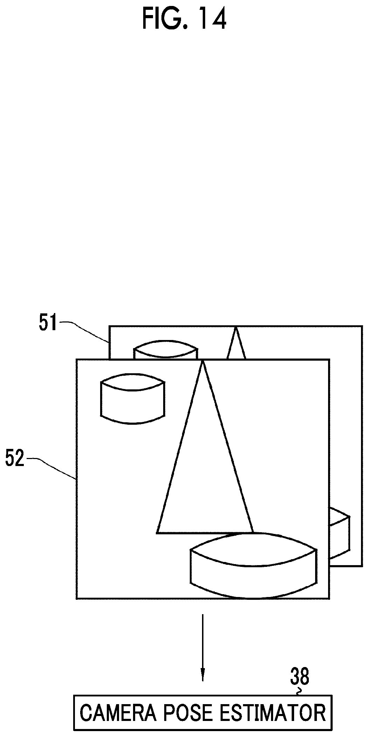

Fig. 14 is an explanatory diagram in which a camera pose change between the first observation image and the second observation image is estimated by a camera pose estimator.

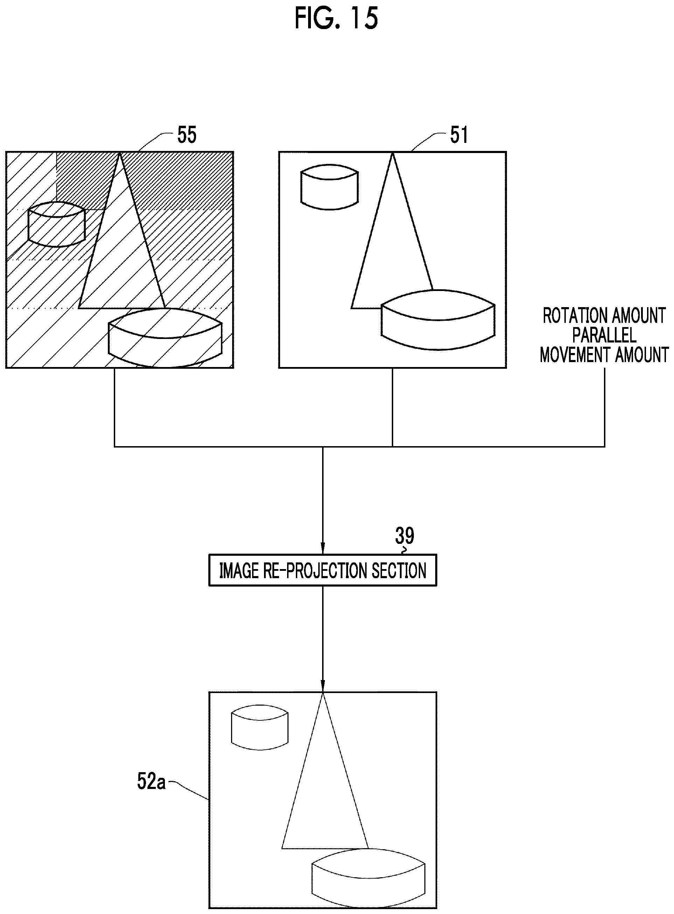

Fig. 15 is an explanatory diagram in which image re-projection is performed using an estimated depth map, the observation image, and a camera pose change amount.

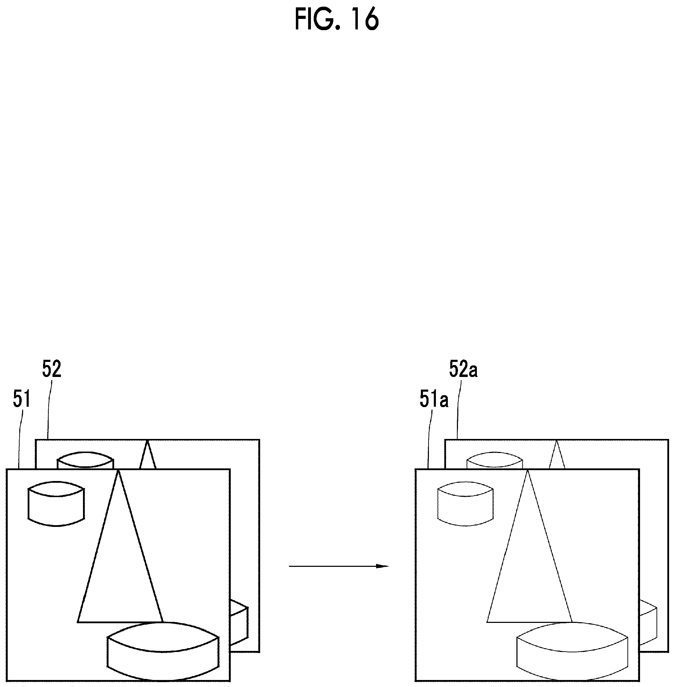

Fig. 16 is an explanatory diagram in which re-projection of two estimated images is performed from two observation images.

## DESCRIPTION OF THE PREFERRED EMBODIMENTS

First Embodiment

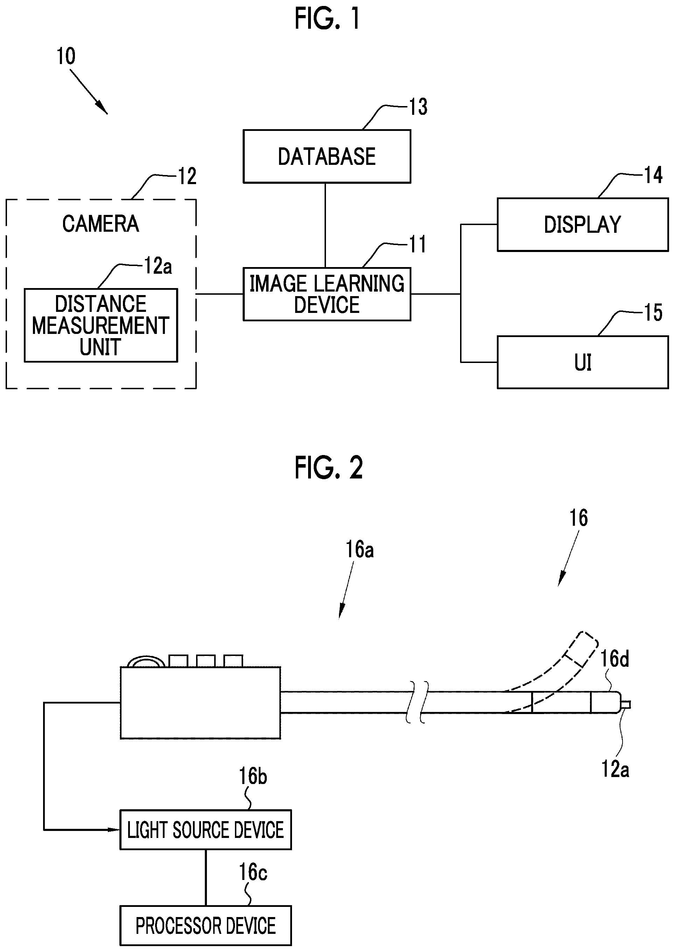

Fig. 1 is a diagram showing a configuration example of an image learning system 10 that implements an image learning method in the embodiment of the present invention. The image learning system 10 includes an image learning device 11, a camera 12 including a distance measurement unit 12a, a database 13, a display 14, and a user interface (UI) 15. The image learning device 11 is electrically connected to the camera 12, the database 13, the display 14, and the user interface 15. The image learning device 11 acquires an image captured in an examination from the camera 12 including the distance measurement unit 12a.

The camera 12 is an imaging apparatus including an image sensor and transmits an observation image, which is generated by imaging an observation target, to the image learning device 11. The distance measurement unit 12a acquires distance data of the observation image through laser distance measurement or the like in imaging and transmits the observation image having the acquired distance data to the image learning device.

The database 13 is a device capable of storing the acquired image and transmitting and receiving data to and from the image learning device 11 and may be a recording medium such as a universal serial bus (USB) or a hard disc drive (HDD). The image learning device 11 can perform distance estimation through image learning after the end of imaging instead of image learning in real time. The user interface 15 is an input device through which settings and the like are input to the image learning device 11, and includes a keyboard, a mouse, and the like.

As shown in Fig. 2, as the camera 12, an endoscope system 16 for observing and imaging a digestive tract or the like, which is the observation target, may be connected to the image learning device 11. The endoscope system 16 comprises an endoscope 16a, a light source device 16b, and a processor device 16c, and the endoscope 16a includes the distance measurement unit 12a that is provided at a distal end portion 16d thereof and that emits measurement light, such as a laser. In a case where the endoscope system 16 is used as the camera 12, the functions of the processor device 16c and the image learning device 11 may be implemented by the same device.

In the present embodiment, in a case where distance measurement is performed on the entire observation image, actual distance data is collected using a method such as laser distance measurement with a low irradiation density for an imaging range R and is acquired as sparse actual distance data. The sparse actual distance data is, for example, actual distance data having a value only at some points such as less than 1%, one location, or a few locations of pixels of the entire image. The actual distance data includes at least an actual distance value and information on a location within the observation image where the actual distance value is present. The sparse actual distance data includes a case where the measured actual distance value is present at one location in one observation image.

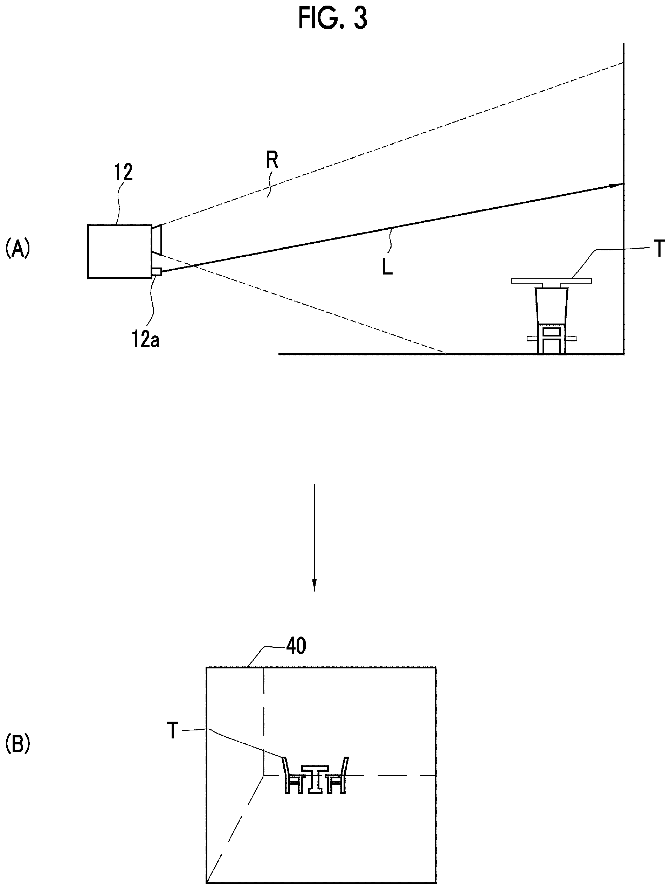

As shown in (A) of Fig. 3, in a case where the camera 12 is a general digital camera that images indoors or outdoors, a captured image obtained by capturing an observation target T which is a specific object such as a table or a chair with the image sensor is acquired, and the distance measurement unit 12a, which is a laser measurement device or the like, irradiates at least one location of the imaging range R with measurement light L and measures an actual distance to the observation target T. Alternatively, imaging may be performed without capturing the specific observation target T, and any location may be imaged for the actual distance to be measured. (B) of Fig. 3 is an indoor captured image that is acquired by performing imaging with respect to the imaging range R and that is transmitted to the image learning device 11 together with the measured actual distance data, as an observation image 40.

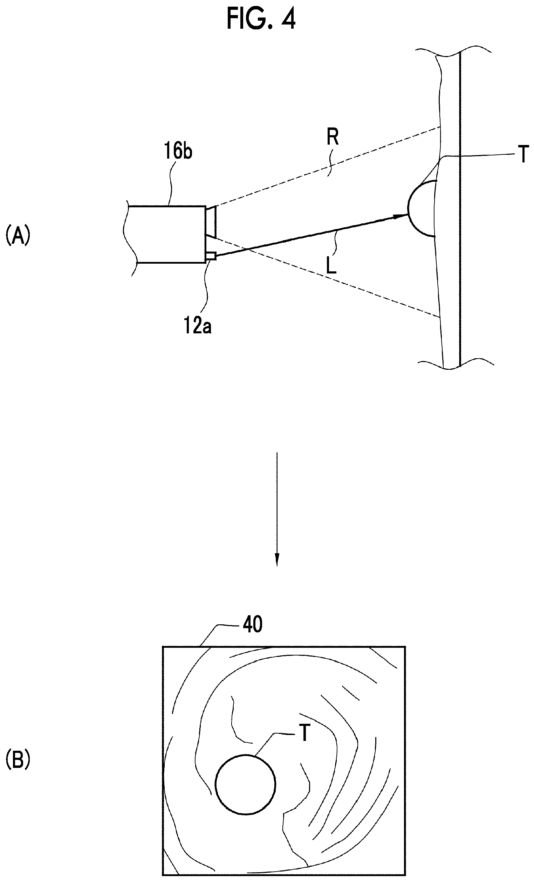

As shown in (A) of Fig. 4, in a case where the endoscope system 16 is used as the camera 12, the inside of the digestive tract is observed from the distal end portion 16d that is inserted into a subject under examination and that has an imaging optical system and an illumination optical system, and a captured image obtained by capturing the observation target T, such as a polyp, with the image sensor is acquired. The distance measurement unit 12a irradiates at least one location of the imaging range R with measurement light L and measures the actual distance to the observation target T. Alternatively, the entire digestive tract may be imaged as the observation target without capturing the specific observation target T, and any location may be imaged for the actual distance to be measured. (B) of Fig. 4 is an endoscopic image that is acquired by imaging the imaging range R as the observation image 40 and that is transmitted to the image learning device 11 together with the measured actual distance data.

In a case where a laser irradiation point moves during a light exposure period in capturing the observation image 40 or in a case where the laser irradiation point moves for at least one frame in generating the observation image 40 from a plurality of frames, a plurality of measured points p can be obtained in one observation image 40 even in the laser measurement for acquiring actual distance data for one point.

In imaging, unless otherwise designated, white light is used as illumination light, a video signal of images of 60 frames per second (60 fps) is acquired, and the imaging time is recorded. Additionally, it is preferable to count the time in units of one-hundredth of a second in a case where the video signal is at 60 fps. Further, in capturing the indoor captured image and the endoscopic image, only a wall surface may be imaged without capturing a specific object as the observation target T.

As shown in Fig. 5, in the image learning device 11, a program in a program memory is operated by a central controller (not shown) configured by an image control processor, so that functions of an image acquisition unit 20, a display controller 22, an input reception unit (not shown), and a learning model management unit 30 are implemented. With the implementation of the function of the learning model management unit 30, functions of an actual distance collation section 32, the distance estimator 33, a comparison section 34, and a parameter update section 35 are implemented.

The image acquisition unit 20 receives data such as an image captured from the camera 12. The acquired image is transmitted to the learning model management unit 30. In a case where image learning or distance estimation is performed after the end of imaging without being performed in real time, or the like, the acquired image is transmitted to the database 13. The display controller 22 performs control to display a still image or a video on the display 14. The input reception unit is connected to the user interface 15.

The learning model management unit 30 acquires the observation image and the actual distance data from the camera 12 or the database 13 via the image acquisition unit 20. The observation image 40 having estimated distance information, which will be described below, is displayed on the display 14 via the display controller 22. Additionally, in the image learning device 11, a program related to processing such as image processing is stored in the program memory (not shown).

The actual distance collation section 32 collates the actual distance data measured by the distance measurement unit 12a with the observation image 40. Through the collation, a measured point at which the actual distance value in the observation image 40 is present is detected. In a case of the laser distance measurement, a laser irradiation point can be detected as the measured point.

The distance estimator 33 is a trained model, has a computer algorithm consisting of a neural network that is trained using input training data, and discriminates between pieces of input information or detects specific image information according to training contents. The distance estimator 33 has an updatable distance estimation parameter that is used to calculate an estimated distance between any pixel of the input image and the camera 12, and uses the distance estimation parameter to perform distance estimation on the input image.

The learning in the distance estimator 33 includes supervised learning for learning from an image having actual distance data, which is ground truth data, and unsupervised learning for learning from an image not having actual distance data. In the distance estimation, in order to perform any one or both of the estimations, the distance estimator 33 can update the distance estimation parameter through both types of learning.

In addition, the distance estimator 33 receives, from a parameter update section 35, an input of a loss indicating a difference between the actual distance data obtained by measuring the distance to the observation target T for at least one location within the imaging range, and the calculated estimated distance, to update the distance estimation parameter in the distance estimator 33. It is preferable that locations of the imaging range at which the actual distance data and the estimated distance are calculated are the same.

The comparison section 34 compares the value of the actual distance data with the corresponding estimated distance obtained by the distance estimator 33. Through the comparison, a difference between the actual distance and the estimated distance is calculated as the loss.

The parameter update section 35 updates the distance estimation parameter in the distance estimator 33 such that the loss is minimized, based on the loss calculated by the comparison section 34. The calculated loss may be transmitted to the distance estimator 33, which may be used as a parameter update instruction. Further, instead of the minimization, the update may be performed such that the loss is equal to or less than a predetermined threshold value. The predetermined threshold value varies depending on the value of the actual distance.

Although the indoor captured image is described as an example in the present embodiment, the observation image 40 may be any of an endoscopic image, an indoor captured image, an outdoor captured image, or the like. In a case where the actual distance measurement is performed through one-point laser irradiation for one frame of the observation image 40, actual distance data for one point is obtained in one image. On the other hand, in a case where measurement is performed with respect to a plurality of points in the laser irradiation during capturing one image or in a case where one observation image 40 is created from a plurality of continuous frames where the laser irradiation is performed, actual distance data for a plurality of locations in one observation image 40 can be acquired.

Fig. 6A is the observation image 40 with a depth, which is obtained by imaging the observation target T with the camera 12 as the indoor captured image. Fig. 6B is a dense actual distance data map 42 that visualizes three-dimensional coordinates of the observation image 40 obtained using ideal actual distance data by acquiring dense actual distance data in a case where a three-dimensional distance measurement device or the like is used together for the observation image 40, or the like. The dense actual distance data map 42 represents the distribution of distances with respect to the camera 12 using shading, where lighter colors indicate shorter distances and darker colors indicate longer distances. In a case where the dense actual distance data for an unobstructed space is acquired, a gradation is projected to match the shape of the space, but in a case where the observation target T or the like is captured within the imaging range R, the shape thereof becomes prominent.

As shown in Fig. 6C, the distance data obtained through laser distance measurement, pattern distance measurement, or the like in the present embodiment is sparse actual distance data such as one point or a few points within the observation image or a density of less than 1% of the entire image. In a case where the sparse actual distance data is acquired, a sparse actual distance data map 44 that is a map that visualizes the measured point p which is a position of the observation image 40 where the actual distance value is present is obtained.

An aspect of conducting learning of the estimated distance in the present embodiment will be described.

The learning using the sparse actual distance data is supervised learning using the ground truth data. The distance estimation parameter can be updated using the actual distance data as the ground truth data. The estimated distance is calculated only for some points, such as only for a measured point having at least one actual distance value, that is, a location where a distance to the observation target is measured, in the observation image 40, and the calculation of the loss and the update of the distance estimation parameter in the distance estimator 33 are performed.

As shown in Fig. 7, the actual distance collation section 32 collates whether the observation image 40 acquired from the image acquisition unit 20 or the database 13 corresponds to the actual distance data included in the sparse actual distance data map 44. The measured point p is a point having an actual distance value and capable of being represented by xy coordinates (pixels) corresponding to the observation image 40. Through the collation, the observation image 40 having the sparse actual distance data, that is, information on the measured point p and the actual distance value corresponding to the measured point p, is obtained. In the collation, the actual distance data with low accuracy due to movement of the laser irradiation point or the like may be sorted out without being used for distance estimation.

As shown in Fig. 8, by inputting the observation image 40 having the sparse actual distance data into the distance estimator 33, the estimated distance between the measured point p and the camera 12 can be calculated. An estimated distance data map 46 is generated. The estimated distance data map 46, which has an estimated point q having the same coordinates (same pixel) as each measured point p and the estimated distance from the estimated point q to the camera 12, is obtained. The estimated distance data map 46 may correspond to the observation image 40 and may be associated with the observation image 40.

By performing distance estimation of the observation image 40 having the sparse actual distance data, each pair of the actual distance and the estimated distance, which are highly likely to be useful for updating the distance estimation parameter in learning, can be acquired. The pair of the actual distance and the estimated distance may be acquired without creating the sparse actual distance data map 44 and the estimated distance data map 46. It is preferable that coordinates of the measured point p and of the estimated point q paired with the measured point p are the same, and the value of the measured point p may be used as the estimated point q in the estimated distance data.

As shown in Fig. 9, the sparse actual distance data map 44 and the estimated distance data map 46 are input to the comparison section 34, the corresponding actual distances and estimated distances are each compared with each other, and a loss indicating the difference is calculated using a loss function. For example, a squared error is calculated as one of the loss functions.

The loss is calculated using a set of the measured points p with the sparse actual distance data present, which is included in the sparse actual distance data map 44, as D(p), and a set of the estimated points q with the estimated distance data present, which is included in the estimated distance data map 46, as D'(q). In this case, since those that match the measured points p are used as the estimated points q to be used in calculation, D'(q) can be calculated as D'(p). The image learning device 11, which uses a plurality of observation images of the same subject, can be trained based on the sum of the losses. In a case where the loss is denoted by L1, the losses obtained through the comparison, which are denoted by Loss (total), can be calculated by Equation (1).

$$\text{Loss (total)} = \Sigma_p L1\{D(p), D'(p)\} \qquad (1)$$

The image learning device 11 is trained by repeating the update of the distance estimation parameter using the loss between the actual distance and the estimated distance for the newly acquired observation image 40 by using the distance estimator 33 having the updated distance estimation parameter. As a result, the distance estimator 33 can be trained even in a case where the actual distance data included in the observation image 40 is sparse.

In the update of the distance estimation parameter in the distance estimator 33, it is determined whether or not the loss is minimized for all the losses calculated by the comparison section 34, and learning may be performed in a case where the loss is minimized, and the process proceed to learning end without performing the update of the distance estimation parameter or to learning using the new observation image 40 in a case where the loss is minimized. Further, instead of minimization, learning may be performed by determining whether or not the loss is equal to or less than a threshold value.

As shown in Fig. 10, a flowchart showing a series of flows up to the update of the parameter input to the distance estimator 33 that calculates the estimated distance of the observation image using the sparse actual distance data as the ground truth data will be described. The image learning device 11 acquires the observation image 40 obtained by capturing the observation target T with the image sensor in the camera 12, the endoscope system having the function of the camera 12, or the like and the actual distance value at the location within the imaging range of the image sensor for the observation image 40 (step ST110). The actual distance collation section 32 collates the observation image 40 with the actual distance value to acquire the actual distance data in which the measured point p in the observation image is specified (step ST120). The distance estimator 33 uses the distance estimation parameter to perform distance estimation with the measured points p at a plurality of locations within the imaging range of the image sensor in the observation image 40, and acquires the estimated distance (step ST130). The comparison section 34 compares the acquired estimated distance with the actual distance to calculate a loss indicating the difference (step ST140). The calculated loss information is sent to the parameter update section 35, and the parameter update section 35 causes the distance estimator 33 to update the distance estimation parameter such that the loss is a minimized value or a value equal to or less than a threshold value (step ST150). The learning model management unit 30 after updating the parameter selects whether or not to continue the learning by using a different observation image 40 (step ST160), and in a case where the learning is continued (Y in step ST160), a new observation image 40 is acquired (step ST110) and learning is repeated. In a case where the learning is not continued (N in step ST160), a series of operations ends.

Second Embodiment

In a second embodiment, unsupervised learning using time-series images with camera pose changes, which are videos, continuous still images, or the like, is conducted in addition to the supervised learning. In the unsupervised learning, learning is performed using a re-projection error, which is calculated using an image re-projected for at least one observation image by extracting observation images before and after the camera pose change at any point in time from the time-series images. The reception of the time-series image in a case of a video occurs at a timing after the end of imaging, but the image acquisition unit 20 may frame and acquire a video signal during real-time imaging before the video is created. Descriptions of other contents that are the same as those of the first embodiment will not be repeated.

As shown in Fig. 11, in the image learning device 11 in the second embodiment, in addition to the functions of the image learning device 11 (see Fig. 2) of the first embodiment, functions of a camera pose estimator 38 and an image re-projection section 39 are provided. The learning model management unit 30 acquires time-series images from the camera 12 capable of video capturing, continuous capturing, or the like, or from the database 13. The distance estimator 33 calculates an estimated distance. The camera pose estimator 38 outputs a camera pose change amount through which camera pose changes in a plurality of input observation images can be estimated. The image re-projection section 39 re-projects an estimated image, in which an aspect of the observation image after the camera pose change is estimated, by using the observation image before the camera pose change, the camera pose change amount, and the estimated distance.

As shown in Fig. 12, the image acquisition unit 20 extracts at least two observation images from the time-series images 50. The image acquisition unit 20 may decide on observation images to be extracted, based on image information. The extracted observation images are transmitted to the learning model management unit 30. The time-series images 50 may be any of endoscope-captured images, indoor captured images, outdoor captured images, or the like.

The observation images to be extracted are two observation images in which a camera pose change has occurred, and in a case where one image is set to a source image and the other image is set to a target image, the estimated image is generated by re-projecting the target image based on the source image, the estimated distance of the source image, and the camera pose change amount. A re-projection error is calculated by comparing the generated estimated image with the target image. The source image and the target image may be images continuously captured in the time-series images or may be images in a state in which any time has elapsed. It is preferable that there is a difference in imaging time between the imaging times of the source image and the target image according to the frame rate, and the image acquisition unit 20 acquires information on the imaging time as the image information. In addition, during extraction, the lapse of a certain time may be used as an extraction condition. For the re-projection error, it is preferable that a deviation in the estimated distance is calculated as the re-projection error by comparing the estimated distance in the re-projected estimated image with the estimated distance in the target image. Further, as the re-projection error, a deviation in the position, orientation, or shape of the observation target between the estimated image and the target image may be used, or a deviation in the position between the measured point p re-projected on the estimated image and the measured point p of the target image may be used.

In a case where two observation images are extracted from the time-series images 50, the two observation images are set such that the observation image before the camera pose change is a first observation image 51 and the observation image after the camera pose change is a second observation image 52, and unsupervised learning is performed using a set of the first observation image 51 and the second observation image 52. For example, the first observation image 51 is used as the source image, and the second observation image 52 is used as the target image. The camera pose change is a change in the posture of the image sensor from the source image to the target image, and the estimated distance to be calculated is the estimated distance of the source image. Between the source image and the target image for estimating the camera pose change amount, there is a change in at least any of the rotation or the movement of the image sensor, and images in which a common observation target is captured are used.

The camera pose estimator 38 is a trained model, has a computer algorithm consisting of a neural network that is trained using input training data, and outputs the camera pose change amount between points in time when two observation images are captured, in response to an input of the plurality of observation images acquired from the time-series images. As the camera pose change amount, the change amount of rotation and parallel movement in the image sensor are estimated in response to an input of the observation images at points in time before and after the camera pose change. The estimated value is output as the camera pose change amount.

The image re-projection section 39 re-projects the estimated image of the target image from the source image, the camera pose change amount output by the camera pose estimator 38, and the estimated distance output by the distance estimator 33. That is, by fitting information on the estimated posture change of the image sensor from the source image to the target image, and the estimated distance with respect to the source image, the estimated image in which the aspect of the target image is estimated is generated. The fitting of the estimated distance may be performed by the image re-projection section 39 through the acquisition of the estimated distance, but may be performed by the comparison section 34 through the acquisition of the estimated distance corresponding to the estimated image re-projected from the image re-projection section 39, from the distance estimator 33.

The distance estimator 33 has a function of switching between processing of performing distance estimation of the estimated point q corresponding to the measured point p in the input image and processing of performing distance estimation for each pixel of the input image. The comparison section 34 compares the acquired target image with the estimated image to calculate an error between the images. Learning is performed using the sum of losses in which a loss indicating the re-projection error is added to a loss indicating the difference between the actual distance and the estimated distance calculated in the same manner as in the first embodiment (see Equation (1)).

As shown in Fig. 13, the distance estimator 33 acquires a first estimated depth map 54, which visualizes scale-agnostic estimated distance information of the first ob servation image 51, and a second estimated depth map 55, which visualizes scale-agnostic estimated distance information of the second observation image 52, through the distance estimation for each pixel of the extracted observation images. The estimated depth map represents the distribution of distances with respect to the camera 12 using shading, where lighter colors indicate shorter distances and darker colors indicate longer distances. Since the scale-agnostic estimated distance is calculated, the distribution of distances in the estimated depth map represents relative distances in the image. The estimated depth map may be output as an image.

In the scale-agnostic distance estimation, it is difficult to calculate the estimated distance with an absolute scale (mm, cm, or the like). However, by combining the scale-agnostic distance estimation with the sparse actual distance data acquired at the time of capturing the observation image 40, the scale can be fitted onto the estimated depth.

As shown in Fig. 14, in the estimation of the camera pose change by the camera pose estimator 38, the input of the first observation image 51 and the second observation image 52 is received from the image acquisition unit 20, and a rotation amount and a parallel movement amount of the camera 12 between the first observation image 51 and the second observation image 52 are calculated as the camera pose change amount.

In a case where the camera pose change amount and the estimated distance are obtained, the estimated image obtained by re-projecting the target image can be generated, and a pair of the estimated image and the target image corresponding to the estimated image are created in order to calculate the re-projection error. The re-projection error is obtained by comparing the target image with the estimated image through the comparison section 34, and the parameter update section 35 updates the distance estimation parameter such that the re-projection error is minimized or is a value equal to or less than the threshold value.

As shown in Fig. 15, in the re-projection of the second observation image 52, the first observation image 51, the second estimated depth map 55, and the camera pose change amount having at least the rotation amount and the parallel movement amount are input to the image re-projection section 39. The image re-projection section 39 generates an estimated second image 52a obtained by re-proj ecting the second observation image 52 from the first observation image 51, based on the estimated depth of the second observation image 52 and the calculated camera pose change amount. The estimated second image 52a is transmitted to the comparison section 34. The comparison section 34 acquires the second observation image 52 and the estimated second image 52a and performs a comparison. The re-projection error is calculated as the loss through the comparison.

As shown in Fig. 16, an estimated first image 51a and the estimated second image 52a may be generated to calculate two re-projection errors also by performing re-projection based on a reversed relationship of the source image and the target image, from the first observation image 51 and the second observation image 52. The re-projection errors are calculated in the calculation of the losses indicating the re-projection errors using the first observation image 51 and the second observation image 52 of the present embodiment. The first estimated depth map 54 obtained by performing the scale-agnostic distance estimation of the first observation image 51, and the camera pose change amount including at least the rotation amount and the parallel movement amount from the second observation image 52 to the first observation image 51, which are output by the camera pose estimator 38, are calculated from the second observation image 52 acquired later in time series. As a result, in a case where the same number of observation images 40 are used, the distance estimation parameter can be updated with high accuracy.

The parameter update section 35 can update the distance estimation parameter related to the unsupervised learning by transmitting the re-projection error calculated as the loss to the distance estimator 33. The distance estimation parameter is updated such that the re-projection error is a minimized value or a value equal to or less than the threshold value. The calculation of the loss by the unsupervised learning using the estimated image and the loss by the supervised learning of the above-described first embodiment are performed in parallel. In a case of minimization, the distance estimator 33 is trained to update the distance estimation parameter such that the sum of the input losses is minimized. In addition, in that case, it is preferable to update the distance estimation parameter such that the re-projection error itself is minimized. Similarly, a case where the distance estimation parameter is updated such that the re-projection error is a value equal to or less than the threshold value may be employed. Further, although at least two observation images before and after the camera pose change are extracted from the time-series images, three or more observation images may be extracted to calculate a plurality of re-projection errors.

In the second embodiment, by performing learning by using the unsupervised learning, which uses the time-series images 50 and the observation image 40 having the sparse actual distance data, and the supervised learning together, even for the observation image having the sparse actual distance data, high-accuracy distance estimation can be performed on the entire observation image.

Third Embodiment

In a third embodiment, an aspect is employed in which the distance estimation parameter is fitted to the trained model, in which the distance estimator 33 has been trained through unsupervised learning or the like, by using the sparse actual distance data. Descriptions of other contents that are the same as those of the first embodiment and the second embodiment will not be repeated.

In the unsupervised learning, adjustment related to a scale coefficient S is performed using the sparse actual distance data because it is difficult to perform distance estimation with the absolute scale. It is described that, in the update of the distance estimation parameter, the difference between the actual distance and the estimated distance is used in the first embodiment, and the re-projection error of the estimated image corresponding to the observation image is used in the second embodiment to train the distance estimator 33, but in the present embodiment, the scale coefficient S in a case of performing the distance estimation, which is included in the distance estimation parameter, is used for the comparison between the actual distance and the estimated distance.

The comparison section 34 calculates an error E between the actual distance in the sparse actual distance data and a value obtained by multiplying an estimated distance acquired from an estimated point corresponding to a sparse actual distance by the scale coefficient S. The parameter update section 35 causes the distance estimator 33 to calculate the scale coefficient S by which the error E is minimized or is a value equal to or less than a threshold value, based on a relationship between a value of the scale coefficient and the error E. The distance estimator 33 is trained by updating the distance estimation parameter using the acquired scale coefficient S.

For example, in a case where the measured point p of the actual distance value, the sparse actual distance data D(p), the estimated distance data D'(p), and the scale coefficient S are used, the error E can be obtained using Equation (2). Since the corresponding measured point p is used for the estimated point q unless otherwise designated, D'(q) is used as D'(p). The measured point p constitutes a set of points at which sparse actual distance values are present.

$$E = \Sigma_p (D(p) - S{*}D'(p))^2 \qquad (2)$$

In the unsupervised learning, there are cases where, in a case where training is sufficiently performed, or the like, newly conducting the supervised learning and acquiring a large amount of actual distance data can be time-consuming and labor-intensive. For this reason, the scale coefficient S is specified using the sparse actual distance data used in the present embodiment, so that it is possible to reduce a burden on a user or a time in the training. The update of the distance estimation parameter using the scale coefficient S may be combined with the content of the first embodiment or the second embodiment.

In the present embodiment, the image learning device 11 has been described using an example in which distance estimation processing is performed in a case where the endoscope-captured image, the indoor captured image, and the outdoor captured image are acquired by the camera 12, but the present invention is not limited thereto, and the distance estimator 33 may be trained for images acquired by medical apparatuses such as an ultrasound image capturing apparatus or a radiography apparatus, or other imaging apparatuses.

In each of the embodiments, as the hardware structure of a processing unit that executes various kinds of processing, such as the central controller, the input reception unit, the image acquisition unit 20, the display controller 22, and the actual distance collation section 32, the distance estimator 33, the comparison section 34, the parameter update section 35, the camera pose estimator 38, and the image re-projection section 39, which are provided in the learning model management unit 30, various processors to be described below are used. The various processors include a central processing unit (CPU) that is a general-purpose processor which functions as various processing units by executing software (programs), a programmable logic device (PLD) that is a processor of which a circuit configuration can be changed after manufacturing, such as a field programmable gate array (FPGA), a dedicated electrical circuit that is a processor having a circuit configuration exclusively designed to execute various types of processing, and the like.

One processing unit may be composed of one of these various processors or may be composed of a combination of two or more processors of the same type or different types (for example, a plurality of FPGAs or a combination of a CPU and an FPGA). Alternatively, a plurality of processing units may be configured by one processor. Examples of the configuration in which a plurality of processing units are configured by one processor include a first aspect in which one or more CPUs and software are combined to configure one processor and the processor functions as a plurality of processing units, as represented by a computer such as a client or a server. Examples of the configuration include a second aspect in which a processor that implements functions of the entire system including a plurality of processing units with one integrated circuit (IC) chip is used, as represented by a system on chip (SoC). As described above, various processing units are composed of one or more of the above-described various processors, as the hardware structure.

Further, as the hardware structure of the various processors, more specifically, an electrical circuit (circuitry) in which circuit elements such as semiconductor elements are combined is used. Additionally, the hardware structure of the storage unit is a storage device, such as a hard disc drive (HDD) or a solid state drive (SSD). Further, from the above description, the image learning device and the image learning method according to the following Appendices 1 to 11 can be understood.

Appendix 1

An image learning device comprising:

a processor,
in which the processor is configured to:

acquire at least one observation image obtained by imaging an observation target with an image sensor;
calculate, for the observation image, an estimated distance to the observation target for each of a plurality of locations within an imaging range of the image sensor by using a distance estimation parameter; and
update the distance estimation parameter based on a difference between an actual distance obtained by measuring a distance to the observation target and the estimated distance for at least one location within the imaging range.

Appendix 2

The image learning device according to Appendix 1,
in which the processor is configured to:
calculate the estimated distance only for some locations in the observation image.

Appendix 3

The image learning device according to Appendix 2,
in which the processor is configured to:
calculate the estimated distance for a location at which the actual distance is measured.

Appendix 4

The image learning device according to any one of Appendices 1 to 3, further comprising:

a distance estimation model,
in which the processor is configured to:
use the distance estimation model to calculate the estimated distance using the distance estimation parameter and to perform learning to update the distance estimation parameter based on the difference.

Appendix 5

The image learning device according to any one of Appendices 1 to 4,
in which the processor is configured to:

acquire a first observation image and a second observation image captured after a certain time has elapsed from the first observation image from a plurality of the observation images captured in time series;
calculate a camera pose change amount that is a change amount of rotation and movement of the image sensor between the first observation image and the second observation image;
use the first observation image, the camera pose change amount, and the estimated distance to reproject an estimated second image in which an aspect after the certain time has elapsed from the first observation image is estimated;
calculate a re-projection error between the second observation image and the estimated second image; and
update the distance estimation parameter such that the re-projection error is minimized.

Appendix 6

The image learning device according to Appendix 5,
in which the processor is configured to:

use the second observation image, the camera pose change amount, and the estimated distance to re-project an estimated first image in which an aspect before the certain time has elapsed in the second observation image is estimated; and
update the distance estimation parameter such that a re-projection error between the first observation image and the estimated first image is minimized.

Appendix 7

The image learning device according to any one of Appendices 1 to 6,
in which the processor is configured to:
update the distance estimation parameter such that the difference between the actual distance and the estimated distance is a minimum value or is equal to or less than a predetermined threshold value.

Appendix 8

The image learning device according to Appendix 5,
in which the processor is configured to:

calculate a scale coefficient by which an error between the actual distance and a value obtained by multiplying the estimated distance by the scale coefficient is a minimum value or is equal to or less than a threshold value; and
update the distance estimation parameter by using the scale coefficient.

Appendix 9

The image learning device according to any one of Appendices 1 to 8,
in which the observation target is a digestive tract, and the observation image is an endoscopic image.

Appendix 10

The image learning device according to any one of Appendices 1 to 9,
in which the processor is configured to:
use a value acquired through laser-based distance measurement as the actual distance.

Appendix 11

An image learning method comprising:

a step of acquiring at least one observation image obtained by imaging an observation target with an image sensor;
a step of calculating, for the observation image, an estimated distance to the observation target for each of a plurality of locations within an imaging range of the image sensor by using a distance estimation parameter; and
a step of updating the distance estimation parameter based on a difference between an actual distance obtained by measuring a distance to the observation target and the estimated distance for at least one location within the imaging range.

Explanation of References

10: image learning system
11: image learning device
12: camera
12a: distance measurement unit
13: database
14: display
15: user interface
16: endoscope system
16a: endoscope
16b: light source device
16c: processor device
16d: distal end portion
20: image acquisition unit
22: display controller
30: learning model management unit
32: actual distance collation section
33: distance estimator
34: comparison section
35: parameter update section
38: camera pose estimator
39: image re-projection section
40: observation image
42: dense actual distance data map
44: sparse actual distance data map
46: estimated distance data map
50: time-series image
51: first observation image
51a: estimated first image
52: second observation image
52a: estimated second image
54: first estimated depth map
55: second estimated depth map
L: measurement light
p: measured point
q: estimated point
R: imaging range
T: observation target

## Claims

1. An image learning device (11) comprising:
   one or more processors configured to:

   acquire at least one observation image (40) obtained by imaging an observation target with an image sensor;
   calculate, for the observation image (40), an estimated distance to the observation target for each of a plurality of locations within an imaging range of the image sensor by using a distance estimation parameter; and
   update the distance estimation parameter based on a difference between an actual distance obtained by measuring a distance to the observation target and the estimated distance for at least one location within the imaging range.

2. The image learning device according to claim 1,
   wherein the one or more processors are configured to:
   calculate the estimated distance only for some locations in the observation image (40).

3. The image learning device according to claim 2,
   wherein the one or more processors are configured to:
   calculate the estimated distance for a location at which the actual distance is measured.

4. The image learning device according to claim 1, further comprising:

   a distance estimation model,
   wherein the one or more processors are configured to:
   use the distance estimation model to calculate the estimated distance using the distance estimation parameter and to perform learning to update the distance estimation parameter based on the difference.

5. The image learning device according to claim 1,
   wherein the one or more processors are configured to:

   acquire a first observation image (51) and a second observation image (52) captured after a certain time has elapsed from the first observation image (51) from a plurality of the observation images captured in time series;
   calculate a camera pose change amount that is a change amount of rotation and movement of the image sensor between the first observation image (51) and the second observation image (52);
   use the first observation image (51), the camera pose change amount, and the estimated distance to re-project an estimated second image (52a) in which an aspect after the certain time has elapsed from the first observation image (51) is estimated;
   calculate a re-projection error between the second observation image (52) and the estimated second image (52a); and
   update the distance estimation parameter such that the re-projection error is minimized.

6. The image learning device according to claim 5,
   wherein the one or more processors are configured to:

   use the second observation image (52), the camera pose change amount, and the estimated distance to re-project an estimated first image (51a) in which an aspect before the certain time has elapsed in the second observation image (52) is estimated; and
   update the distance estimation parameter such that a re-projection error between the first observation image (51) and the estimated first image (51a) is minimized.

7. The image learning device according to any one of claims 1 to 6,
   wherein the one or more processors are configured to:
   update the distance estimation parameter such that the difference between the actual distance and the estimated distance is a minimum value or is equal to or less than a predetermined threshold value.

8. The image learning device according to claim 5,
   wherein the one or more processors are configured to:

   calculate a scale coefficient by which an error between the actual distance and a value obtained by multiplying the estimated distance by the scale coefficient is a minimum value or is equal to or less than a threshold value; and
   update the distance estimation parameter by using the scale coefficient.

9. The image learning device according to claim 1,
   wherein the observation target is a digestive tract, and the observation image (40) is an endoscopic image.

10. The image learning device according to claim 1,
    wherein the one or more processors are configured to:
    use a value acquired through laser-based distance measurement as the actual distance.

**11.** An image learning method comprising:

a step of acquiring at least one observation image (40) obtained by imaging an observation target with an image sensor;

a step of calculating, for the observation image (40), an estimated distance to the observation target for each of a plurality of locations within an imaging range of the image sensor by using a distance estimation parameter; and

a step of updating the distance estimation parameter based on a difference between an actual distance obtained by measuring a distance to the observation target and the estimated distance for at least one location within the imaging range.

## FIG. 1

10

```
                    ┌──────────────┐
                    │   DATABASE   │──13
                    └──────┬───────┘
┌ ─ ─ ─ ─ ─ ─ ─ ─ ┐       │
    CAMERA  ──12           │              ┌─────────────┐
│                 │        │              │   DISPLAY   │──14
   ┌───────────┐  │  ┌─────┴────────┐     └─────────────┘
│  │ DISTANCE  │──12a│IMAGE LEARNING│──11
   │MEASUREMENT│  │  │   DEVICE     │     ┌─────────────┐
│  │   UNIT    │  │  └──────────────┘     │     UI      │──15
   └───────────┘  │                       └─────────────┘
└ ─ ─ ─ ─ ─ ─ ─ ─ ┘
```

## FIG. 2

16

16a

16d

12a

```
┌──────────────────┐
│LIGHT SOURCE DEVICE│──16b
└─────────┬─────────┘
          │
┌─────────┴─────────┐
│ PROCESSOR DEVICE  │──16c
└───────────────────┘
```

# FIG. 3

(A)

(B)

# FIG. 4

(A)

(B)

# FIG. 5

LEARNING MODEL MANAGEMENT UNIT 30

IMAGE ACQUISITION UNIT 20

ACTUAL DISTANCE COLLATION SECTION 32

DISTANCE ESTIMATOR 33

COMPARISON SECTION 34

PARAMETER UPDATE SECTION 35

DISPLAY CONTROLLER 22

11

## FIG. 6A

## FIG. 6B

## FIG. 6C

# FIG. 7

ACTUAL DISTANCE COLLATION SECTION

# FIG. 8

# FIG. 9

COMPARISON SECTION

# FIG. 10

```
                    ┌──────────┐
                    │  START   │
                    └────┬─────┘
                         │ ◄──────────────────────┐
        ┌────────────────┴──────────────────┐     │
ST110 ──┤     ACQUIRE OBSERVATION IMAGE      │     │
        │     AND ACTUAL DISTANCE VALUE      │     │
        └────────────────┬──────────────────┘     │
        ┌────────────────┴──────────────────┐     │
ST120 ──┤  ACQUIRE SPARSE ACTUAL DISTANCE DATA    │
        └────────────────┬──────────────────┘     │
        ┌────────────────┴──────────────────┐     │
ST130 ──┤     ACQUIRE ESTIMATED DISTANCE     │     │
        │ BY USING DISTANCE ESTIMATION PARAMETER  │
        └────────────────┬──────────────────┘     │
        ┌────────────────┴──────────────────┐     │
ST140 ──┤      CALCULATE LOSS INDICATING     │     │
        │ DIFFERENCE BETWEEN ACTUAL DISTANCE │     │
        │      AND ESTIMATED DISTANCE        │     │
        └────────────────┬──────────────────┘     │
        ┌────────────────┴──────────────────┐     │
ST150 ──┤ UPDATE DISTANCE ESTIMATION PARAMETER    │
        │    SUCH THAT LOSS IS MINIMIZED     │     │
        └────────────────┬──────────────────┘     │
        ╱────────────────┴──────────────────╲   Y │
ST160 ─<         CONTINUE LEARNING?           >────┘
        ╲────────────────┬──────────────────╱
                         │ N
                    ┌────┴─────┐
                    │   END    │
                    └──────────┘
```

# FIG. 11

11

30

LEARNING MODEL MANAGEMENT UNIT

32
ACTUAL DISTANCE COLLATION SECTION

33
DISTANCE ESTIMATOR

34
COMPARISON SECTION

35
PARAMETER UPDATE SECTION

38
CAMERA POSE ESTIMATOR

39
IMAGE RE-PROJECTION SECTION

20
IMAGE ACQUISITION UNIT

22
DISPLAY CONTROLLER

EP 4 421 737 A2

FIG. 12

IMAGE
EXTRACTION

TIME

50

51

52

# FIG. 13

DISTANCE ESTIMATOR

# FIG. 14

51

52

38

CAMERA POSE ESTIMATOR

# FIG. 15

ROTATION AMOUNT
PARALLEL
MOVEMENT AMOUNT

IMAGE RE-PROJECTION SECTION  39

# FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017217215 A
- JP 2020534617 A
- JP 2020 A
- JP 534617 A